# EUROPÄISCHE PATENTSCHRIFT

(11) **EP 4 638 206 B1**
(45) Veröffentlichungstag und Bekanntmachung des Hinweises auf die Patenterteilung: **25.11.2026**
(21) Anmeldenummer: 23822260.8
(22) Anmeldetag: 07.12.2023
(51) Int. Cl.: B60T 1/06, B60K 1/00, B60K 17/00, F16D 55/36, F16D 65/18

(54) **ELEKTRISCHER ANTRIEB MIT INTEGRIERTEN BREMSEN**
ELECTRIC DRIVE WITH INTEGRATED BRAKES
COMMANDE ÉLECTRIQUE À FREINS INTÉGRÉS

(30) Priorität: 21.12.2022 DE 102022214114
(43) Veröffentlichungstag der Anmeldung: 29.10.2025
(73) Patentinhaber: MAGNA Powertrain GmbH & Co KG, 8502 Lannach (AT)
(72) Erfinder: LUGMAYR, Thomas, 4523 Neuzeug (AT)
(74) Vertreter: Reuter, Silke Beatrix
(86) Internationale Anmeldenummer: PCT/EP2023/084790
(87) Internationale Veröffentlichungsnummer: WO 2024/132571

(56) Entgegenhaltungen:
- EP-A1- 3 760 892
- DE-A1- 10 219 921
- DE-A1- 102019 216 012
- DE-A1- 102019 216 013
- DE-A1- 102020 201 027
- DE-A1- 102021 107 504
- DE-U1- 20 201 379

## Beschreibung

Die Erfindung betrifft einen elektrischen Antrieb für ein Fahrzeug, wobei mindestens eine elektrische Maschine, ein Differential und zwei Bremsen in einem gemeinsamen Gehäuse verbaut sind, wobei die Bremsen Lamellenbremsen sind.

Die Erfindung betrifft auch ein Verfahren zur Betätigung von Bremsen eines elektrischen Antriebs eines Fahrzeugs.

### Stand der Technik

Feinstaub ist eines der größten Gesundheitsrisiken, die von Luftverschmutzung ausgehen. Laut Schätzungen mehrerer Studien ist Feinstaub jährlich für mehrere Millionen Todesfälle verantwortlich. Insbesondere ultrafeine Teilchen wie Rußpartikel werden als krebserregend eingestuft.

Motoren sind nur eine Ursache des Problems, denn ein Großteil des innerstädtisch messbaren Feinstaubs geht auf Abriebpartikel zurück. Hauptverursacher dieser Partikel sind neben Reifen vor allem Bremsscheiben und Bremsbeläge.

Der Umstieg auf Elektroautos ändert nichts an diesem Problem, denn auch Elektroautos sind üblicherweise mit Scheiben- oder Trommelbremsen ausgeführt.

Somit würde auch der großflächige Umstieg auf Elektroautos an dieser Schadstoffbelastung nichts ändern.

Schwere Elektrofahrzeuge mit langer Batteriereichweite werden das Problem des Abriebs von Bremsen, Reifen und Straße sogar verstärken.

Also müssen Gegenmaßnahmen gefunden werden, die den Brems- und Reifenabrieb reduzieren. Während Emissionen von Verbrennungsprozessen intensiv analysiert wurden, steht die Forschung der sogenannten Non-Exhaust-Emissions, also der Nicht-Abgas-Partikelemissionen, noch am Anfang. Dies betrifft insbesondere die Simulation von Feinstaub- beziehungsweise Mikroplastikemissionen. Für die Emissionen von Nicht-Abgaspartikeln eines Fahrzeugs gibt es bislang keine festgelegte, einheitliche Testmethode.

Zudem existiert bislang keine Gesetzgebung zur Begrenzung oder Reduzierung der Nicht-Abgas-Partikelemissionen. Für die bremsinduzierte Feinstaubentwicklung ist eine gesetzliche Festlegung von Grenzwerten jedoch angekündigt.

Hersteller und Zulieferer suchen indes nach Ansätzen und technischen Lösungen, um den Brems- und Reifenabrieb zu reduzieren. Mit der Hartstoffbeschichtung von Bremsscheiben via Diodenlaser ist künftig ein Verfahren verfügbar, das eine Reduktion der bremsbedingten Feinstaubemission ermöglicht. Die beschichteten Bremsen erzeugten zwar auch weiterhin Feinstaub, jedoch in weitaus geringerem Maße als unbeschichtete Bremsscheiben. Die Vorteile der Grauguss-Bremsscheibe blieben dabei weiterhin erhalten.

Bei elektrischen Fahrzeugen sind die Bremsen zumeist als Scheiben- oder Trommelbremsen ausgeführt und innerhalb des Radkastens platziert.

Bekannt ist ein Projekt ZEDU1 (Zero Emission Drive Unit) der DLR. Die Bremsanlage wandert darin vom Radträger in die Antriebseinheit und wird dort integriert. In Kombination mit einer speziell abgestimmten Hochleistungselektronik, einer Leistungsbatterie und eines BBW-Systems (Break by Wire) kann die Bremsenergie nahezu vollständig zurückgewonnen, also rekuperiert werden, so dass der mechanische Bremsanteil auf ein Minimum reduziert wird. Das ermöglicht es, die Antriebseinheit sehr kompakt zu bauen, diese in die Getriebe- Bremseneinheit zu integrieren und Bremsabriebsemissionen komplett zu eliminieren. Im ZEDU-1 ist eine Lamellenbremse direkt in den Elektromotor integriert. Sie sorgt zusammen mit der Hochleistungselektronik für eine fast vollständige Antriebsenergierückgewinnung. Dabei landet der Bremsabrieb in einem Ölbad, dessen Inhalt ständig durch einen Filter gepumpt und gereinigt wird.

Das Dokument DE 10 2019 216 012 A1 offenbart einen elektrischen Antrieb für ein Fahrzeug mit zumindest einer elektrischen Maschine mit einer Rotorwelle, die mit zumindest einem Planetengetriebe gekoppelt ist, welches mit einem Abtriebsdifferential zum Antrieb von zumindest zwei Abtriebswellen gekoppelt ist vorgeschlagen, wobei zumindest zum Realisieren einer ersten Gangstufe ein erstes Schaltelement und zum Realisieren einer zweiten Gangstufe ein zweites Schaltelement vorgesehen sind und wobei die Rotorwelle und das Planetengetriebe sowie die Abtriebswellen koaxial zueinander angeordnet sind, wobei zumindest das erste Schaltelement und das zweite Schaltelement axial versetzt zu der Rotorwelle der elektrischen Maschine angeordnet sind und dass die Schaltelemente mit dem Planetengetriebe radial geschaltet angeordnet sind.

Es ist Aufgabe der Erfindung eine verbesserte elektrische Achse für ein Fahrzeug mit integrierten Bremsen vorzustellen, die in die elektrische Antriebseinheit integriert sind, wobei die aus dem Stand der Technik bekannten Probleme weitgehend vermieden werden.

Die Aufgabe wird gelöst mit einem elektrischen Antrieb für ein Fahrzeug, wobei mindestens eine elektrische Maschine, ein Differential und zwei Bremsen in einem gemeinsamen Gehäuse verbaut sind, wobei die Bremsen Lamellenbremsen sind, die auf den Seitenabtriebswellen des Differentials mitdrehend angeordnet sind und die Seitenabtriebswellen im Betätigungsfall mit einem Bremsgehäuse verbinden, um ein Bremsmoment auf das Fahrzeug aufzubringen.

Die Bremse rotiert im Falle einer geöffneten Bremse vollständig mit der Ausgangswellendrehzahl (Umlauf der gesamten Bremse) der Seitenabtriebswellen und erzeugt somit kaum Schleppverluste vergleichbar mit konventionellen Bremssystemen. Diese Situation entspricht der Neutralstellung.

Die Bremse umfasst vorteilhafterweise eine Synchronisiereinheit. Synchronisiereinheiten werden in Kraftfahrzeugen beispielsweise in Getrieben in verschiedenen Varianten eingesetzt und sind dem Fachmann grundsätzlich bekannt. Sie dienen zur Drehzahlanpassung zwischen den zu koppelnden Elementen und damit zur Reduzierung der Schaltkraft und des Verschleißes. Eine bekannte Variante ist dabei eine Kegel-Reibkupplung. Je nach zu synchronisierendem Moment können ein oder mehrere Reibkegel vorhanden sein. Entsprechend ihrer Anzahl wird zwischen Einkonus-Synchronisation oder Mehrkonus-Synchronisation unterschieden.

In einer bevorzugten Ausführungsform der Bremse ist die Synchronisiereinheit als Einkonus-Synchronisierer ausgeführt. Die Kegelreibkupplung der Synchronisiereinheit wird zwischen einem ersten Synchronring und einem zweiten Synchronkörper gebildet.

Ein Betätigungskolben bringt eine Kraft auf eine axial verschieblich aber drehfest auf der Seitenabtriebswelle angeordneten Nabe auf. Diese ist über axiale Lager an dem ersten Lamellenträger abgestützt. Der erste Lamellenträger ist mit einem Synchronring gekoppelt, so dass über eine axiale Verlagerung des Synchronrings dieser in reibschlüssigen Eingriff mit einem gehäusefesten Synchronkörper gelangt und eine reibschlüssige Verbindung zu dem Bremsgehäuse herstellt. Der erste Lamellenträger ist über die Synchronisierungseinheit in der Betriebsstellung gehäusefest festlegbar.

Das zweite Lamellenpaket ist über den Betätigungskolben mit dem ersten Lamellenpaket und den Seitenabtriebswellen verbindbar.

Die Aufgabe wird auch gelöst mit einem Verfahren zum Bremsen eines elektrischen Antriebs, wobei die geöffnete Bremse mit beiden Lamellenpakten mit den Seitenabtriebswellen rotiert und bei Betätigung der Bremse in zwei aufeinander ablaufenden Verschiebungsschritten die Lamellenpakete mit dem Bremsgehäuse verbunden werden.

In einem ersten Schritt des Verfahrens wird zunächst über eine Betätigung einer auf der Seitenabtriebswelle drehfest aber axial verschiebbaren Nabe eine Synchronisation des mitdrehenden ersten Lamellenträgers mit erstem Lamellenpaket ausgehend von der Ausgangsdrehzahl der abgetriebenen Welle des Differentials 21 auf die Drehzahl 0 bewirkt. Nach der Synchronisation ist der erste Lamellenträger über den Synchronring reibschlüssig an dem mit dem Gehäuse 6 verbundenen Synchronkörper festgelegt.

Im anschließenden zweiten Verfahrensschritt werden die alternierend zueinander angeordneten Lamellen des ersten und zweiten Lamellenpaketes durch eine weitergehende Betätigung axial verschoben und zueinander in Reibkontakt gebracht. In Abhängigkeit der weitergehenden Betätigungskraft wird ein entsprechendes Bremsmoment erzeugt.

Bei offenen Bremsen in der Neutralstellung wird keine Beölung vorgesehen, aber bei geschlossener Bremse erfolgt eine Beölung der Lamellenpakete durch eine Ölbohrung entlang der Seitenabtriebswelle und einer Bohrung in der verschieblichen Nabe.

### Beschreibung der Figuren

Es zeigt:
- Figur 1: eine Bremse des elektrischen Antriebs an einer Seitenabtriebswelle,
- Figur 2: den Aufbau des elektrischen Antriebs schematisch,
- Figur 3: die unbetätigte Bremse (Neutralstellung) in einer schematischen Darstellung in einem Axialschnitt,
- Figur 4: eine betätigte Bremse in einem ersten Betätigungszustand in einer vereinfachten schematischen Darstellung; und
- Figur 5: eine betätigte Bremse in einem zweiten Betätigungszustand in einer vereinfachten schematischen Darstellung.

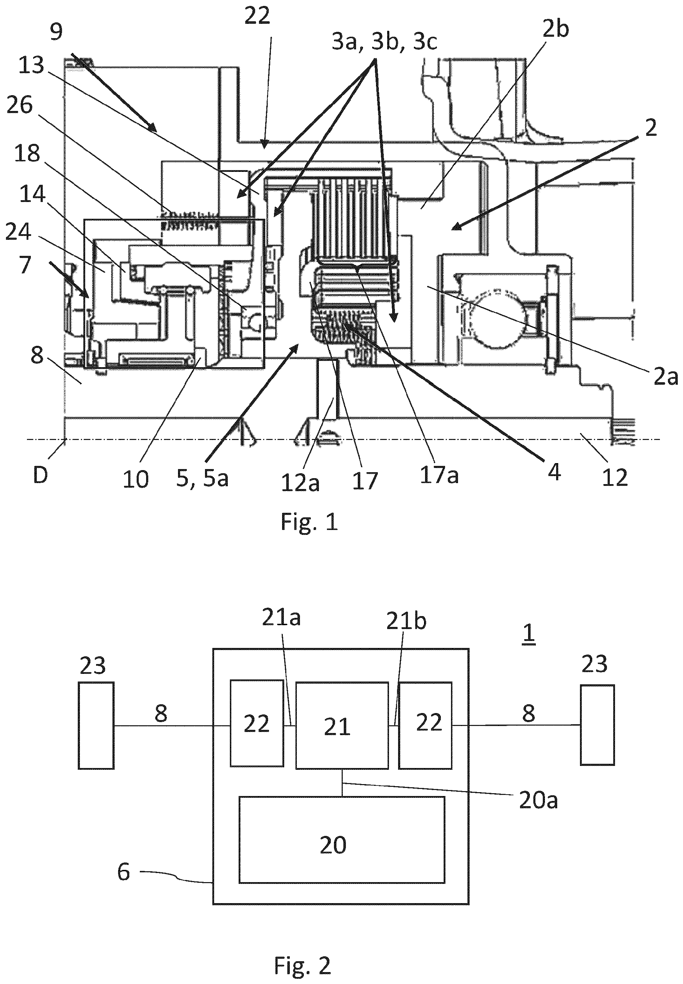

Figur 2 zeigt eine elektrische Antriebseinheit 1, die eine elektrische Maschine 20 enthält. Diese elektrische Maschine 20 ist mit einem nicht dargestellten Untersetzungsgetriebe wirkverbunden gekoppelt, das eine Getriebestufe aufweist. Die Getriebeausgangswelle 20a treibt in ein Differential 21 ein. Die getriebenen Wellen 21a, 21b des Differentials 21 sind mit den Seitenabtriebswellen 8 verbunden. Wie es aus der schematischen Darstellung der Figur 2 zu erkennen ist, sind beidseits des Differentials 21 in einer symmetrischen Anordnung Bremsen 22 angeordnet. Die Bremsen übertragen bei entsprechender Betätigung ein Bremsmoment auf die Seitenabtriebswellen 8. Die Seitenabtriebswellen 8 treiben die Rädern 23 des Fahrzeugs an.

Die Bauteile elektrische Maschine 20 mit Untersetzungsgetriebe, Differential 21 und Bremsen 22 sind in einem gemeinsamen Gehäuse 6 verbaut und bilden ein Modul.

Figur 1 zeigt die Bremse 22 einer Seite der elektrischen Antriebseinheit 1 in einem Axialschnitt in einer schematischen Darstellung in dem geöffneten Zustand. Dieser geöffnete Zustand, in dem kein Bremsmoment übertragen wird, entspricht der Neutralstellung.

Nachfolgend wird nur die Bremse 22 auf einer Seite des Differentials 21 beschrieben. Die Bremse auf der gegenüberliegenden anderen Seite des Differentials auf der Seitenantriebswelle 8 ist entsprechend symmetrisch aufgebaut.

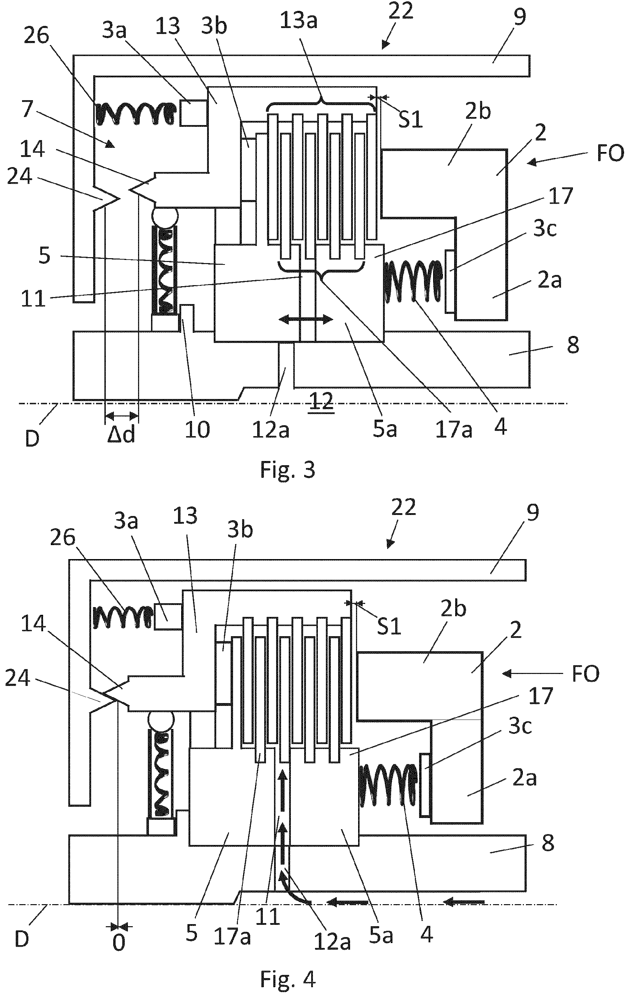

Figur 3 zeigt in einer stark vereinfachten schematischen Darstellung ebenfalls die Bremse 22 im geöffneten Zustand / Neutralstellung. Die Darstellung zeigt nur einen Teilausschnitt der Bremse. Die Drehachse D der Seitenabtriebswelle 8 ist in den Figuren eingezeichnet.

Die Richtung längs der Drehachse D wird nachfolgend als Axialrichtung bezeichnet.

Die Bremse 22 weist einen ersten Lamellenträger 13 mit einem ersten Lamellenpaket 13a und einen zweiten Lamellenträger 17 mit einem zweiten Lamellenpaket 17a auf. Erstes und zweites Lamellenpaket 13a, 17a sind derart ineinandergreifend angeordnet, dass die Lamellen des ersten Lamellenpakets 13a und die zweiten Lamellen des zweiten Lamellenpakets 17a in Axialrichtung gesehen benachbart zueinander und alternierend angeordnet sind. In der Neutralstellung befindet sich zwischen den ersten und zweiten Lamellen in Axialrichtung gesehen ein Spalt. In der Betätigungsstellung wird durch eine axiale Verschiebung der Lamellen ein Reibschluss zwischen den alternierend angeordneten Lamellen des ersten und zweiten Lamellenpakets hergestellt. Dieser grundsätzliche Aufbau und die Anordnung der Lamellenpakete und Lamellenträger sind aus den aus dem Stand der Technik bekannten und werden an dieser Stelle nicht näher beschrieben.

Der erste Lamellenträger 13 ist vorzugsweise der in Radialrichtung gesehen äußere Lamellenträger. Der zweite Lamellenträger 17 ist dann entsprechend der innere Lamellenträger. Der erste Lamellenträger 13 ist über ein Radiallager 18 auf dem zweiten Lamellenträger 17 gelagert.

Der zweite Lamellenträger 17 ist auf einer Nabe 5 fixiert. In einer alternativen Ausführung, die schematisch in den Figuren 3-5 dargestellt ist, wird der zweite Lamellenträger 17 durch eine Nabe 5 ausgebildet.

Die Nabe 5 ist auf der Seitenabtriebswelle 8 zur Übertragung eines Drehmoments drehfest angeordnet. In Axialrichtung ist die Nabe 5 verschieblich auf der Seitenabtriebswelle 8 gelagert. Eine bekannte Ausführungsform einer derartigen Nabe 5 ist eine Keilnabe 5a, die über eine Keilverzahnung formschlüssig auf der Seitenabtriebswelle 8 angeordnet ist und aufgrund der formschlüssig ineinandergreifenden Verzahnung zwischen Keilnabe 5a und Seitenabtriebswelle 8 axialverschieblich auf der Seitenabtriebswelle 8 ist. Die axiale Verschiebbarkeit der Nabe 5 ist durch den Doppelpfeil angezeigt.

In der Nabe 5 sind radiale Ölbohrungen 11 als Durchgangsbohrungen eingebracht, die ausgehend von einer äußeren Mantelfläche der Nabe 5 zu einer radial inneren Mantelfläche der Nabe 5 verlaufen.

Die Seitenabtriebswelle 8 enthält ebenfalls eine Ölbohrung 12. Die Ölbohrung 12 ist ausgehend von einer Stirnseite der Seitenabtriebswelle 8 zunächst in Axialrichtung verlaufend ausgeführt und zweigt dann in eine Vielzahl von Radialbohrungen 12a ab. Die Radialbohrungen 12a erstrecken sich ausgehend von der axialen Ölbohrung 12 bis zur Oberfläche der Seitenabtriebswelle 8 und ermöglichen somit eine Ölzuführung auf die äußere Mantelfläche der Seitenabtriebswelle 8 im Bereich der Austrittsöffnungen der Radialbohrungen 12a. In der in der Figur 3 gezeigten Neutralstellung der Bremse 22 ist die Nabe 5 derart auf der Seitenabtriebswelle 8 angeordnet, dass die Radialbohrungen 12a von der inneren Mantelfläche der Nabe 5 verdeckt sind.

Die Bremse 22 weist des Weiteren eine Synchronisiereinheit 7 auf, die als Einkonus-Synchronisierer ausgeführt ist. Die Kegelreibkupplung mit Reibbelägen der Synchronisiereinheit wird zwischen einem Synchronring 14 und einem Synchronkörper 24 gebildet. Diese Art der Synchronisierung ist aus dem Stand der Technik bekannt und wird an dieser Stelle nicht näher beschrieben.

Der Synchronkörper 24 ist gehäusefest angeordnet. Der Synchronring 14 ist unmittelbar oder mittelbar an den ersten Lamellenträger 13 gekoppelt.

In der Neutralstellung der Bremse 22 weist der Synchronring 14 in Axialrichtung gesehen einen Abstand Δd zu dem gehäusefest angeordneten Synchronkörper auf.

Der erste Lamellenträger 13 ist beidseits über axiale Lager 3a, 3b abgestützt gelagert. Das axiale Lager 3a stützt den ersten Lamellenträger 13 unter Zwischenschaltung einer Feder 26 an dem Bremsgehäuse 9 ab. Das zweite axiale Lager 3b lagert in Axialrichtung gesehen den ersten Lamellenträger 13 auf dem zweiten Lamellenträger 17 bzw. auf der ersten fix angeordneten Lamelle des zweiten Lamellenpakets 17a.

Die Bremse 22 umfasst weiterhin einen Betätigungskolben 2, der vorzugsweise hydraulisch aktuiert ist. Die Aktuatorik ist in den Zeichnungen nicht dargestellt und näher beschrieben. Der Betätigungskolben 2 weist einen radialen Abschnitt 2a und an einem oberen Endabschnitt des radialen Abschnitts 2a sich axial erstreckenden Betätigungsabschnitt 2b auf. Der Betätigungsabschnitt 2b erstreckt sich in Richtung auf die ineinander geschachtelt angeordneten ersten und zweiten Lamellenpakete 13a und 13b. In der Neutralstellung befindet sich zwischen dem Betätigungsabschnitt 13a des Betätigungskolbens 2 und dem ersten Lamellenpaket 13a bzw. der ersten außenliegenden Lamelle in Axialrichtung gesehen ein Spalt mit dem Abstand S1.

Der Betätigungskolben 2 ist über ein axiales Lager 3c unter Zwischenschaltung einer Feder 4 an einer Stirnseite der Nabe 4 abgestützt. Der Betätigungskolben 2 ist durch Einleitung einer Betätigungskraft die durch den Pfeil F0 dargestellt ist axial verschiebbar.

Die Federkonstante der Feder 4 ist größer als die Federkonstante der Feder 26.

Ist die Bremse 22 in der Neutralstellung geöffnet, werden die Lamellenpakete der Bremse 22 durch die abgedeckte Ölbohrung 12/ Radialbohrungen 12a nicht beölt. Eine Beölung kann jedoch auch über eine externe Versorgung und Ansteuerung erfolgen.

Bei einer Betätigung der Bremse wird der Betätigungskolben 2 mit einer Kraft F0 beaufschlagt, sodass der Betätigungskolben 2 axial verschoben wird. In einem ersten Schritt wird zunächst bei der Axialverschiebung und Kraftbeaufschlagung in Richtung des Pfeils F0 über das axiale Lager 3c eine Kraft auf die Nabe 5 übertragen. Dieser erste Verfahrensschritt ist in der Figur 4 dargestellt. In dieser Situation wird die Nabe 5, wie es aus Zeichnung ersichtlich ist axial verschoben und die Radialbohrung 11 wird in Überdeckung mit den Radialbohrungen 12a gebracht, so dass eine Ölzuführung zu den Lamellenpaketen gewährleistet wird. Die Nabe 5 liegt an einem Axialanschlag 10 axial abgestützt an der Seitenantriebswelle 8 an und kann nicht weiter axial verschoben werden.

Der weitere Kraftfluss erfolgt über das Axiallager 3b auf den ersten Lamellenträger 13 und den Synchronring 14 der Synchronisiereinheit 7. Die axiale Verschiebung der Nabe 5 führt zu einer axialen Verschiebung des Synchronrings 14 gegen die Federkraft der Feder 26. Der Synchronring 14 gelangt in eine reibschlüssige Wirkverbindung mit dem Synchronkörper 24. Nach abgeschlossener Synchronisation in dem gezeigten ersten Verfahrensschritt wird der erste Lamellenträger 13 über die Synchronisiereinheit 7 mit dem Gehäuse 9 gehäusefest verbunden und somit auf Drehzahl Null gebremst. Die axiale Verschiebung in dem ersten Verfahrensschritt entspricht der Verschiebung Δd.

In dieser Situation nach dem ersten Verfahrensschritt (erster Lamellenträger 13 ist an das Gehäuse 6 gehäusefest gekoppelt) ist der Betätigungskolben 2 bzw. der axiale Betätigungsabschnitt 13a weiterhin über den Spalt S1 von dem ersten Lamellenpaket des ersten Lamellenträgers 13 beabstandet angeordnet.

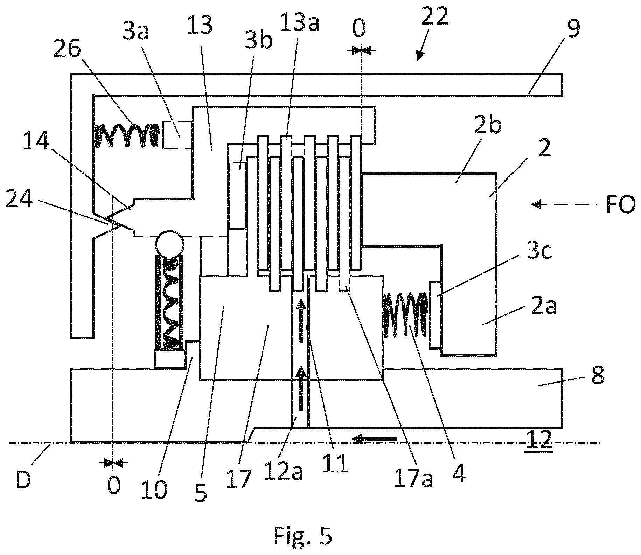

In dem in der Figur 5 gezeigten zweiten Verfahrensschritt wird über eine weitere Verschiebung des Betätigungskolbens 2 nach einer Verschiebung um den axialen Abstand + der Betätigungsabschnitt 13a zur Anlage an die äußere Lamelle des ersten Lamellenpakets 13a gebracht, so dass eine Betätigungskraft auf das erste Lamellenpaket 13a ausgeübt wird. Hierdurch werden die Spalte zwischen den alternierend angeordneten Lamellen des ersten und zweiten Lamellenpakets 13, 17 geschlossen durch die reibschlüssige Verbindung zwischen den beiden Lamellenpaketen kann somit ein Bremsmoment erzeugt werden.

Durch das zuvor beschriebene "Schließen" der Bremse 22 in dem zweiten Verfahrensschritt wird die Feder 4 komprimiert und die Nabe 5 stützt sich federbelastet an dem Anschlag 10 ab. Da die Nabe 5 drehfest auf der Seitenabtriebswelle 8 angeordnet ist und die reibschlüssig wirkverbundenen Lamellenpakete über den ersten Lamellenträger 13 und die Synchronisiereinheit 7 gehäusefest abgestützt sind, wird das Bremsmoment auf die Seitenabtriebswelle 8 aufgebracht.

In Figur 5 ist die Bremse 22 im geschlossenen Zustand dargestellt.

Beim Öffnen der Bremse 22 wird zuerst die Bremskraft verringert und dann durch die Federkraft der Feder 26 die Synchronisiereinheit 7 geöffnet. Nach dem Entkoppeln des ersten Lamellenträgers 13 von dem Bremsgehäuse 9 kann der erste Lamellenträger 13 wieder durch das vorhandene Schleppmoment und die radiale Lagerung auf dem zweiten Lamellenträger 17 frei mitlaufend drehen.

Das Öl wird mittels einer Pumpe zu einem Filter gepumpt, um geg. Reibpartikel auszufiltern. Dadurch vermeidet man oxidativen Feinstaub in der Umwelt.

### Bezugszeichenliste

1 Elektrischer Achsantrieb
2 Betätigungskolben
2a radialer Abschnitt Betätigungskolben
2b axialer Abschnitt / Betätigungsabschnitt
3a -3c axiale Lager
4 Feder
5 Nabe
5a Keilnabe
6 Gehäuse
7 Synchronisiereinheit
8 Seitenabtriebswelle
9 Bremsgehäuse
10 Anschlag
11 Bohrung
12 Ölbohrung
12a Radialbohrung
13 erster Lamellenträger
13a erstes Lamellenpaket
14 Synchronring
17 zweiter Lamellenträger
18 Radiallager
17a zweites Lamellenpaket
20 Elektrische Maschine inkl. Getriebestufe
21 Differential
22 Bremse
23 Rad
24 Synchronkörper
26 Feder

## Patentansprüche

1. Elektrischer Antrieb (1) für ein Fahrzeug, wobei mindestens eine elektrische Maschine (20), ein Differential (21) und zwei Bremsen (22) in einem gemeinsamen Gehäuse (6) verbaut sind, wobei die Bremsen (22) Lamellenbremsen mit einem ersten und einem zweiten Lamellenträger (13, 17) mit zugeordnetem ersten und zweitem Lamellenpaket (13a, 17a) sind und wobei die Bremsen (22) ein Bremsgehäuse (9) umfassen, wobei der erste und zweite Lamellenträger (13, 17) auf den Seitenabtriebswellen (8) des Differentials (21) mitdrehend angeordnet sind und die Seitenabtriebswellen (8) im Betätigungsfall mit einem Bremsgehäuse (9) verbinden, um ein Bremsmoment auf das Fahrzeug aufzubringen.

2. Elektrischer Antrieb (1) für ein Fahrzeug nach Anspruch 1, wobei im Betätigungsfall eine Betätigungskraft über einen axial verschiebbar gelagerten Betätigungskolben (2) auf das erste Lamellenpaket (13, 17) aufbringbar ist, und wobei sich der Betätigungskolben (2) über ein axiales Lager unter Zwischenschaltung einer Feder (4) mittelbar oder unmittelbar an dem zweiten Lamellenträger abstützt.

3. Elektrischer Antrieb (1) nach Anspruch 1 oder 2, wobei jede Bremse (22) eine Synchronisierungseinheit (7) umfasst, wobei der zweite Lamellenträger (17) axial verschiebbar aber drehfest auf der Seitenabtriebswelle mittelbar oder unmittelbar angeordnet ist, wobei der erste Lamellenträger mittels einer Radiallagers (18) auf dem zweiten Lamellenträger (17) oder einem mit dem Lamellenträger verbundenen Bauteil gelagert ist.

4. Elektrischer Antrieb (1) nach einem der vorangehenden Ansprüche, wobei der zweite Lamellenträger (17) mit einer Nabe (5) fest verbunden oder als Nabe (5) ausgebildet ist, wobei die Nabe (5) axial verschiebbar aber drehfest auf der Seitenabtriebswelle (8) angeordnet Nabe (5) ist.

5. Elektrischer Antrieb (1) nach einem der vorangehenden Ansprüche, wobei die Bremse eine Synchronisiereinheit (7) mit einem Synchronring (14) und einem Synchronkörper (24) umfasst, wobei der Synchronkörper (24) an dem Bremsgehäuse (9) fest angebunden und der Synchronring (14) an dem ersten Lamellenträger (13) angebunden ist, und wobei bei Aufbringen einer Betätigungskraft über den Betätigungskolben (2) auf die Nabe (4) eine reibschlüssige Verbindung zwischen Synchronring (14) und Synchronkörper (24) zur Erzielung einer gehäusefesten Festlegung des ersten Lamellenträgers (13) herstellbar ist.

6. Elektrischer Antrieb (1) nach Anspruch 1, wobei das zweite Lamellenpaket (17a) über den Betätigungskolben (2) mit dem ersten Lamellenpaket (13a) und der jeweiligen Seitenabtriebswellen (8) verbindbar ist.

7. Elektrischer Antrieb (1) nach einem der vorangehenden Ansprüche, wobei die Synchronisiereinheit (7) ein Einkonus-Synchronisierer ist.

8. Verfahren zum Bremsen eines elektrischen Antriebs (1) nach einem der Ansprüche 1 bis 7, wobei die geöffnete Bremse (22) in der Neutralstellung mit erstem und zweitem Lamellenträge (13, 17) mit zugeordneten Lamellenpakten (13a, 17a) mit den Seitenabtriebswellen (8) rotiert und bei Betätigung der Bremse (22) in zwei aufeinander ablaufenden Verschiebungsschritten die Lamellenpakete (13a, 17a) mit dem Bremsgehäuse (9) verbunden werden.

9. Verfahren nach Anspruch 8, wobei der erste Lamellenträger (13) mit erstem Lamellenpaket (13a) in einem ersten Verfahrensschritt zunächst über die Synchonisiereinheit (7) am Bremsgehäuse (9) festgelegt wird und in einem weiteren Verfahrensschritt die alternierend angeordneten Lamellen der beiden Lamellenpakete (13a, 17a) zueinander in Reibkontakt gebracht werden.

10. Verfahren nach Anspruch 8 oder 9, wobei bei offenen Bremsen (22) in der Neutralstellung keine Beölung der Lamellenpakete (13a, 17a) erfolgt, aber bei geschlossener Bremse (22) eine Beölung der Lamellenpakete (13a, 17a) durch eine Ölbohrung (12) und Radialbohrungen (12a) entlang der Seitenabtriebswelle (8) und einer Radialbohrung (11) in der axial verschiebbar gelagerten Nabe (5) erfolgt.

## Claims

1. Electric drive (1) for a vehicle, wherein at least one electric
machine (20), a differential (21), and two brakes (22) are installed in a common housing (6), wherein the brakes (22) are multi-disc brakes with a first and a second disc carrier (13, 17) with the associated first and second set of discs (13a, 17a), and wherein the brakes (22) comprise a brake housing (9), wherein the first and second disc carriers (13, 17) are arranged in co-rotating fashion on the side driven shafts (8) of the differential (21) and, when actuated, connect the side driven shafts (8) to a brake housing (9) in order to apply a brake torque to the vehicle.

2. Electric drive (1) for a vehicle according to Claim 1, wherein, when actuated, an actuating force can be applied to the first set of discs (13, 17) via an axially displaceably mounted actuating piston (2), and wherein the actuating piston (2) is supported indirectly or directly on the second disc carrier via an axial bearing with the interposition of a spring (4).

3. Electric drive (1) according to Claim 1 or 2, wherein each brake (22) comprises a synchronizer unit (7), wherein the second disc carrier (17) is arranged indirectly or directly on the side driven shaft so that it is axially displaceable but non-rotatable, wherein the first disc carrier is mounted by means of a radial bearing (18) on the second disc carrier (17) or a component connected to the disc carrier.

4. Electric drive (1) according to one of the preceding claims, wherein the second disc carrier (17) is designed as fixedly connected to a hub (5) or as a hub (5), wherein the hub (5) is a hub (5) arranged axially displaceably but non-rotatably on the
side driven shaft (8).

5. Electric drive (1) according to one of the preceding claims, wherein the brake comprises a synchronizer unit (7) with a synchronizer ring (14) and a
synchronizer body (24), wherein the synchronizer body (24) is fixedly attached to the brake housing (9) and the synchronizer ring (14) is attached to the first
disc carrier (13), and wherein, when an actuating force is applied to the hub (4) via the actuating piston (2), a frictional connection can be established between the synchronizer ring (14) and the synchronizer body (24) in order to obtain the fixing of the first disc carrier (13) to the housing.

6. Electric drive (1) according to Claim 1, wherein the second set of discs (17a) can be connected to the first set of discs (13a) and the respective side driven shafts (8) via the actuating piston (2).

7. Electric drive (1) according to one of the preceding claims, wherein the synchronizer unit (7) is a single-cone synchronizer.

8. Method for braking an electric drive (1) according to one of Claims 1 to 7, wherein the open brake (22) in the neutral position rotates with the first and second disc carriers (13, 17) with associated sets of discs (13a, 17a) with the side driven shafts (8) and, when the brake (22) is actuated in two successive displacement steps, the sets of discs (13a, 17a) are connected to the brake housing (9).

9. Method according to Claim 8, wherein the first disc carrier (13) with the first set of discs (13a) is in a first method step initially fixed to the brake housing (9) via the synchronizer unit (7) and in a further method step the alternatingly arranged discs of the two sets of discs (13a, 17a) are brought into frictional contact with one another.

10. Method according to Claim 8 or 9, wherein no oiling of the sets of discs (13a, 17a) takes place in the case of open brakes (22) in the neutral position but in the case of closed brakes (22), the sets of discs (13a, 17a) are oiled through an oil bore (12) and radial bores (12a) along the side driven shaft (8) and a radial bore (11) in the axially displaceably mounted hub (5).

## Revendications

1. Entraînement électrique (1) pour un véhicule, au moins une machine
électrique (20), un différentiel (21) et deux freins (22) étant installés dans un carter commun (6), les freins (22) étant des freins multidisques avec un premier et un deuxième support de disque (13, 17) avec des premier et deuxième jeux de disques (13a, 17a) associés, et les freins (22) comprenant un carter de frein (9), le premier et le deuxième support de disque (13, 17) étant disposés en rotation sur les arbres de sortie latéraux (8) du différentiel (21) et, reliant les arbres de sortie latéraux (8) à un carter de frein (9) en cas d'actionnement pour appliquer un couple de freinage au véhicule.

2. Entraînement électrique (1) pour un véhicule selon la revendication 1, une force d'actionnement pouvant être appliquée en cas d'actionnement sur le premier jeu de disques (13, 17) par un piston d'actionnement (2) monté de manière à pouvoir coulisser axialement, et le piston d'actionnement (2) prenant appui indirectement ou directement sur le deuxième support de disque par un palier axial en intercalant un ressort (4).

3. Entraînement électrique (1) selon la revendication 1 ou 2, chaque frein (22) comprenant une unité de synchronisation (7), le deuxième support de disque (17) pouvant être coulissé axialement, étant toutefois disposé de manière solidaire en rotation indirectement ou directement sur l'arbre de sortie latéral, le premier support de disque étant supporté au moyen d'un palier radial (18) sur le deuxième support de disque (17) ou sur un composant relié au support de disque.

4. Entraînement électrique (1) selon l'une des revendications précédentes, le deuxième support de disque (17) étant relié de manière solidaire à un moyeu (5) ou étant formé comme un moyeu (5), le moyeu (5) pouvant être coulissé axialement, le moyeu
(5) étant toutefois disposé de manière solidaire en rotation sur l'arbre de sortie latéral (8).

5. Entrainement électrique (1) selon l'une des revendications précédentes, le frein comprenant une unité de synchronisation (7) avec une bague de synchronisation (14) et
un corps de synchronisation (24), le corps de synchronisation (24) étant fixé de manière solidaire sur le carter de frein (9) et la bague de synchronisation (14) étant fixée sur le premier support de disque (13), et une liaison par friction entre la bague de synchronisation (14) et le corps de synchronisation (24) pouvant être établie pour obtenir une fixation solidaire du carter du premier support de disque (13) lorsqu'une force d'actionnement est appliquée sur le moyeu (4) par le piston d'actionnement (2).

6. Entraînement électrique (1) selon la revendication 1, le deuxième jeu de disques (17a) pouvant être relié par le piston d'actionnement (2) au premier jeu de disques (13a) et aux arbres de sortie latéraux (8) respectifs.

7. Entraînement électrique (1) selon l'une des revendications précédentes, l'unité de synchronisation (7) étant un synchroniseur à cône unique.

8. Procédé de freinage d'un entraînement électrique (1) selon l'une des revendications 1 à 7, le frein ouvert (22) en position neutre avec le premier et le deuxième support de disque (13, 17) avec des jeux de disques (13a, 17a) associés tournant avec les arbres de sortie latéraux (8) et, lorsque le frein (22) est actionné, les jeux de disques (13a, 17a) étant reliés au carter de frein (9) en deux étapes de coulissement successives.

9. Procédé selon la revendication 8, le premier support de disque (13) avec un premier jeu de disques (13a) étant fixé sur le carter de frein (9) d'abord par l'unité de synchronisation (7) dans une première étape de procédé et les disques disposés en alternance des deux jeux de disques (13a, 17a) étant amenés en contact de friction les uns par rapport aux autres dans une autre étape de procédé.

10. Procédé selon la revendication 8 ou 9, les jeux de disques (13a, 17a) n'étant pas lubrifiés lorsque les freins (22) sous ouverts en position neutre, les jeux de disques (13a, 17a) étant toutefois lubrifiés par un alésage d'huile (12) et des alésages radiaux (12a) le long de l'arbre de sortie latéral (8) et d'un alésage radial (11) dans le moyeu (5) monté de manière à pouvoir coulisser axialement lorsque le frein (22) est fermé.
